# EUROPÄISCHE PATENTSCHRIFT

(11) **EP 1 039 650 B1**
(45) Veröffentlichungstag und Bekanntmachung des Hinweises auf die Patenterteilung: **22.02.2006**
(21) Anmeldenummer: 00250073.4
(22) Anmeldetag: 29.02.2000
(51) Int. Cl.: H04B 1/38

(54) **Schaltungsanordnung zur Dämpfungskompensation**
Circuit for attenuation compensation
Circuit pour compenser de l'attenuation

(30) Priorität: 17.03.1999 DE 19913064
(43) Veröffentlichungstag der Anmeldung: 27.09.2000
(73) Patentinhaber: Funkwerk Dabendorf GmbH, 15806 Dabendorf (DE)
(72) Erfinder: Nast, Helmut, 12557 Berlin (DE)
(74) Vertreter: Schubert, Klemens

(56) Entgegenhaltungen:
- DE-A- 4 405 885
- DE-A- 19 514 993
- DE-A- 19 536 640

## Beschreibung

Die Erfindung betrifft eine Schaltungsanordnung zur Dämpfungskompensation, welche es ermöglicht, die in einem HF-Kabel zwischen einer Mobilfunkstation und einer Antenne auftretende Dämpfung ein- oder ausgehender Signale zu kompensieren.

In Kraftfahrzeugen ist beispielsweise die Mobilfunkstation über eine Freisprechanlage und ein HF-Kabel mit einer externen Antenne am Fahrzeug verbunden. Unter anderem in dem Bestreben, die von einem Handy ausgehende Strahlung vom Fahrer fernzuhalten, wird dabei die Antenne des Handys abgeschaltet und die Sendeleistung über das HF-Kabel und die externe Antenne abgegeben. Ebenso erfolgt der Empfang über die externe Antenne und das empfangene Signal wird über die HF-Leitung zur Mobilfunkstation geleitet. Dabei treten in der HF-Leitung unerwünschte Dämpfungen des gesendeten oder empfangenen Signals auf, welche dazu führen können, dass der Sende- und Empfangsbetrieb aufgrund der eng tolerierten Leistungsspezifikationen des Mobilfunks nicht mehr möglich ist. Aus diesem Grunde wurden Schaltungen entwickelt, die als Kompensatoren in die HF-Leitung geschaltet, die auftretende Dämpfung der Signale kompensieren. Die entsprechenden Lösungen haben dabei zu berücksichtigen, dass hinsichtlich des notwendigen Ausgleichs der Dämpfung unterschiedliche Anforderungen in bezug auf das Empfangs- und das Sendesignal bestehen. Daher weist eine entsprechende, für den Duplexbetrieb ausgelegte Schaltung zur Kompensation der Dämpfung des Sendesignals einerseits und des Empfangssignals andererseits gesonderte Zweige auf.

Das Umschalten zwischen den Signalwegen für das Senden und Empfangen wird gemäß einer bisher bekannt gewordenen Lösung durch funkgeräte- und antennenseitig angeordnete Duplexfilter realisiert. Dabei wird beispielsweise das Vorhandensein eines Sendesignals zur Umschaltung auf den für die Übertragung zu sendender Signale ausgelegten Zweig der Schaltung ausgewertet. Eine entsprechende Lösung wird durch die DE OS 44 05 885 offenbart. Die Duplexfilter weisen jedoch den Nachteil auf, dass sich die engen, im GSM-Betrieb geforderten Verstärkungstoleranzen nur mittels eines erheblichen schaltungs-technischen Aufwands einhalten lassen.

Daher wird in der DE 195 36 640 A1 eine Schaltungsanordnung zur Dämpfungskompensation vorgeschlagen, bei welcher an Stelle der Duplexfilter HF-Umschalter zum Einsatz gelangen. Gesteuert durch eine Detektionsschaltung wird mittels der HF-Umschalter jeweils der Signalweg auf den Empfangs- oder den Sendeverstärker umgeschaltet. Eine ähnliche Lösung wird durch die DE 195 14 993 A1 offenbart.

In der jüngsten Zeit haben sich verschiedene Mobilfunknetze etabliert, beispielsweise das D1-, das D2- oder das E-Plus-Netz. Die einzelnen Netze arbeiten teilweise mit unterschiedlichen Trägerfrequenzen, also in verschiedenen Bändern. So arbeiten die D-Netze mit einer Trägerfrequenz um 900 MHz, das E-Netz hingegen mit einer Trägerfrequenz um 1800 MHz. Demgemäß spricht man von GSM900- und GSM1800-Netzen. Um bei den Mobilfunkstationen eine flexible Einsatzmöglichkeit zu gewährleisten, werden diese daher vielfach als Dualbandgeräte ausgelegt. Derartige Geräte ermöglichen dann wahlweise einen Betrieb im GSM900- oder im GSM1800-Betrieb. Bisher sind keine praktikablen Lösungen für an solche Dualbandgeräte adaptierte Kompensatoren bekannt geworden. Eine einfache Verdoppelung der Schaltungsanordnungen gemäß der DE 195 14 993 A1 oder der DE 195 36 640 A1 und frequenzmäßige Anpassung der darin enthaltenen Einheiten und Bauelemente, zur Realisierung eines zweiten Frequenzzweiges, ist dabei jedoch im Grunde nicht zielführend. Eine solche Schaltungsanordnung wäre allenfalls verwendbar für den wahlweisen Betrieb mit einem im GSM900-Netz arbeitenden Mobilfunkgerät oder einem im GSM1800-Netz arbeitenden Mobilfunkgerät, wobei sie in Abhängigkeit des gerade mit ihr betriebenen Mobilfunkgeräts definiert zwischen zwei Betriebsmodi, nämlich dem ausschließlichen Betrieb im GSM900-Netz oder dem ausschließlichen Betrieb im GSM1800-Netz, umschaltbar sein müsste. Bei einem Betrieb mit einem dualbandigen Mobilfunkgerät gilt es jedoch zu berücksichtigen, dass dieses Mobilfunkgerät sowohl Anrufe aus dem GSM900-Netz als auch aus dem GSM1800-Netz empfangen können soll und folglich die entsprechende Schaltungsanordnung zur Dämpfungskompensation darauf ausgelegt sein muss. Zudem gilt es eine unerwünschte gegenseitige Beeinflussung der Frequenzzweige zu verhindern.

Der Erfindung liegt die Aufgabe zugrunde, eine Schaltungsanordnung zur Dämpfungskompensation zu schaffen, welche für den Betrieb mit Dualband-Mobilfunkstationen, also beispielsweise sowohl für den GSM900- als auch für den GSM 1800-Betrieb, geeignet ist.

Die Aufgabe wird durch eine Schaltungsanordnung entsprechend den Merkmalen des Hauptanspruchs gelöst. Mögliche Ausgestaltungen bzw. vorteilhafte Weiterbildungen der erfindungsgemäßen Schaltungsanordnung sind durch die Unteransprüche gegeben.

Die vorgeschlagene Schaltungsanordnung zur Dämpfungskompensation weist in bekannter Weise unterschiedliche Signalwege für empfangene oder zu sendende Signale auf und verfügt folglich über Empfangs- und Sendeverstärker. Die Umschaltung des Signalweges im Hinblick auf eine optimale Kompensation für empfangene Signale bzw. eine entsprechende Kompensation für zu sendende Signale erfolgt in ebenfalls bekannter Weise durch HF-Umschalter. Die HF-Umschalter werden durch eine zwischen ihnen und einer Detektorschalter bestehende Steuerverbindung gesteuert. Über weitere zwischen der Detektorschaltung und dem Empfangs- sowie dem Sendeverstärker bestehende Steuerverbindungen sind die Verstärker zu- und abschaltbar. Zur Realisierung eines dualbandigen Betriebes weist die erfindungsgemäße Schaltungsanordnung einen ersten und einen zweiten Frequenzzweig auf. Die Frequenzzweige sind eingangs- und ausgangsseitig jeweils über Frequenzbandweichen gemeinsam auf eine zum Anschluss des HF-Kabels dienende Eingangs- bzw. Ausgangsbuchse geführt. Jeder Frequenzzweig verfügt jeweils über einen Empfangs- und einen Sendeverstärker, über den Verstärkern zugeordnete HF-Umschalter und eine die HF-Umschalter sowie die Verstärker über entsprechende Steuerverbindungen steuernde Detektorschaltung. Zur Lösung der Aufgabe ist zusätzlich zu den in dem jeweiligen Frequenzzweig zwischen der Detektorschaltung und dem Empfangs- sowie dem Sendeverstärker bestehenden Steuerverbindungen außerdem eine Steuerverbindung zwischen dieser Detektorschaltung und dem Empfangsverstärker des jeweils anderen Frequenzzweiges gebildet. Dabei werden die Verstärker beider Frequenzzweige mittels der zwischen ihnen und den Detektorschaltungen bestehenden Steuerverbindungen so gesteuert, dass bei entsprechendem Schaltzustand der HF-Schalter entweder nur die Empfangsverstärker beider Zweige oder nur der Sendeverstärker eines Zweiges zugeschaltet sind.

Es ist im Sinne der Erfindung, dass im Grundzustand der Schaltung in beiden Frequenzzweigen der Signalweg für zu empfangende Signale aktiv geschaltet und der jeweilige Empfangsverstärker zugeschaltet ist. Entsprechend einer sinnvollen Ausgestaltung der erfindungsgemäßen Schaltungsanordnung ist der selbe Schaltungszustand gegeben, solange die Station im idle mode arbeitet. Weiterhin ist die Erfindung zweckmäßigerweise so ausgebildet, dass dieser Schaltungszustand (Signalweg in beiden Frequenzzweigen über den Empfangsverstärker geschaltet und beide Empfangsverstärker zugeschaltet) auch besteht, solange die Mobilfunkstation zwar in einer Funkzelle eingebucht ist, aber zwischen ihr und der zugehörigen Basisstation kein Datenaustausch erfolgt.

Die Erfindung ist sinnvollerweise so ausgestaltet, dass die Steuerung der Verstärker während eines zwischen der Mobilfunkstation und einer Basisstation erfolgenden Datenaustausches zeitschlitzgesteuert erfolgt. Dabei sind beispielsweise bei einer Gesprächsverbindung innerhalb eines 8 Zeitschlitze gleicher Länge umfassenden Zeitrahmens jeweils innerhalb eines Zeitschlitzes - des Sendezeitschlitzes - der Sendeverstärker des dem jeweiligen Band der bestehenden Verbindung zugeordneten Frequenzzweiges zugeschaltet und alle anderen Verstärker gleichzeitig abgeschaltet. In den darauf folgenden 7 Zeitschlitzen - den Empfangszeitschlitzen - sind dann jeweils beide Empfangsverstärker zugeschaltet, während beide Sendeverstärker abgeschaltet sind. Eine besonders vorteilhafte Ausgestaltung der Schaltungsanordnung ist dadurch gegeben, dass es die Ausbildung der senderseitigen, also mit dem Ausgang der Mobilfunkstation verbundenen Frequenzbandweiche ermöglicht, beim Übergang von einem Zeitrahmen auf den nächsten, mit dem Eintreten in den nächsten Sendezeitschlitz auf das jeweils andere Band umzuschalten.

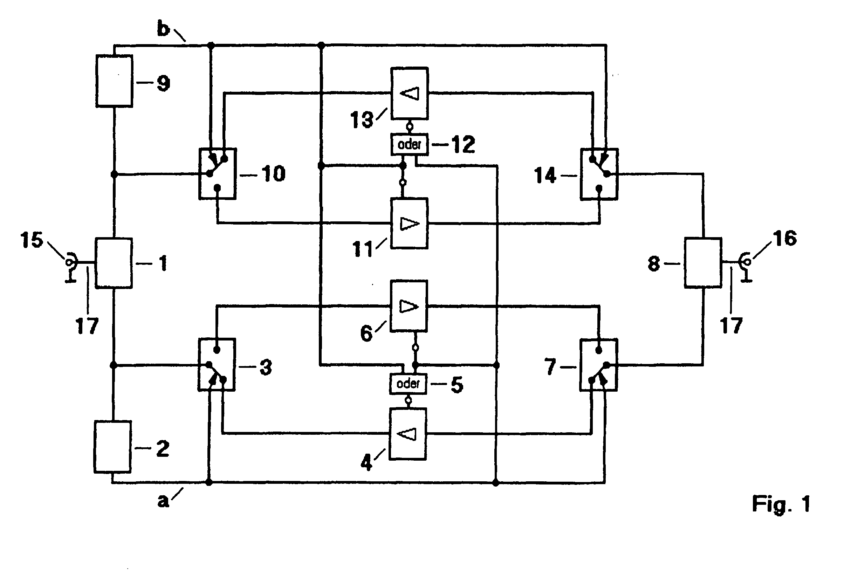

Die Erfindung soll nachfolgend anhand des in der Figur in der Form eines Blockschaltbildes dargestellten Ausführungsbeispiels näher erläutert werden.

Wie aus der Figur ersichtlich, wird die erfindungsgemäße Schaltungsanordnung zwischen dem Ausgang 15 einer, in der Zeichnung allerdings nicht dargestellten Mobilfunkstation und einer Antenne 16 in die HF-Leitung 17 geschaltet. Die Schaltungsanordnung weist zwei Frequenzzweige a, b, vorliegend einen GSM900-Zweig a und GSM1800-Zweig b, auf, welche in Hinblick auf die Dämpfungskompensation durch geeignete Dimensionierung der eingesetzten Bauelemente für das jeweilige Band optimiert sind. Der grundsätzliche Aufbau beider Zweige a, b ist aber, wie aus dem Blockschaltbild zu ersehen, gleich. Jeder Zweig a, b verfügt über einen Empfangs- 4, 13 und einen Sendeverstärker bzw. Leistungsverstärker 6, 11. Mittels HF-Umschaltern 3, 7, 10, 14, die über eine Steuerverbindung mit einer Detektorschaltung 2, 9 verbunden sind, erfolgt die Umschaltung des Signalweges um das jeweilige Signal entsprechend den Erfordernissen über den Empfangs- 4, 13 oder den Sendeverstärker 6, 11 zu leiten. Zwischen jeder Detektorschaltung 2, 9 und den Verstärkern 4, 6, 11, 13 des zugehörigen Zweiges a, b sind außerdem Steuerverbindungen für das Zu- und Abschalten dieser Verstärker ausgebildet. Zusätzlich besteht aber erfindungsgemäß eine weitere, über ein ODER-Glied 12 bzw. 5 geführte Steuerverbindung zwischen einer jeden Detektorschaltung 2 bzw. 9 und dem Empfangsverstärker 13 bzw. 4 des jeweils anderen Frequenzzweiges b bzw. a.

Die Schaltungsanordnung ist in der Figur in einem Schaltzustand gezeigt, welcher den Grundzustand der Schaltungsanordnung darstellt. In diesem Grundzustand nehmen die HF-Umschalter 3, 7, 10, 14 einen Schaltzustand ein, bei dem in beiden Zweigen a, b der Signalweg über den jeweiligen Emfangsverstärker 4 bzw. 13 geleitet ist. Außerdem sind die Empfangsverstärker 4, 13 beider Frequenzzweige a, b zu- bzw. eingeschaltet. Zweckmäßigerweise besteht dieser Zustand auch, wenn sich die nicht dargestellte Mobilfunkstation im idle mode, also im Wartezustand befindet. In diesem mode erwartet die Mobilfunkstation ein Empfangssignal, welches ihr das Vorhandensein eines ihrer SIM-Karte entsprechenden Netzwerkes signalisiert. Entsprechend den GSM-Spezifikationen darf die Mobilfunkstation kein eigenes HF-Signal erzeugen, so dass der beschriebene Schaltzustand des Kompensators zweckentsprechend ist. Hat sich die Mobilfunkstation nach dem Registrieren eines Netzwerkes in dieses Netz eingebucht, so behält der Kompensator den dem Grundzustand entsprechenden Schaltzustand, solange keine Gesprächs- oder Datenverbindung aufgebaut wird, weiterhin bei.

Erhält nun die Schaltungsanordnung von der Mobilfunkstation ein Sendesignal, so wird dieses über die Frequenzbandweiche 1 dem jeweils zutreffenden GSM-Zweig zugeleitet. Bei der Frequenzbandweiche 1 handelt es sich ebenso wie bei der, bezogen auf die Senderichtung, am Ausgang liegenden Frequenzbandweiche 8 um eine Kombination von, auf den jeweiligen Zweig a, b bezogen, als Hoch- bzw. Tiefpass wirkenden Schaltungselementen. Ein GSM900-Sendesignal wird folglich der Detektorschaltung 2 sowie dem Verstärker 6 zugeleitet. Das Umschalten des Signalweges in diesem Frequenzzweig a wird dadurch bewirkt, dass die Steuerverbindung zwischen der Detektorschaltung 2 und den HF-Umschaltern 3, 7 infolge des Überschreitens des für die Detektorschaltung 2 vorgegebenen Schwellwertes das entsprechende Setzen der HF-Umschalter 3, 7 veranlasst. Gleichzeitig wird über zwischen der Detektorschaltung 2 und den Verstärkern 6, 4, 13 bestehende Steuerverbindungen der Sendeverstärker 6 des Zweiges a zugeschaltet, während beide Empfangsverstärker abgeschaltet werden. Der Sendeverstärker des anderen Frequenzzweiges bleibt wegen des Fehlens eines entsprechenden Sendesignals an der Detektorschaltung 9 abgeschaltet. Für den Fall, dass der Frequenzbandweiche 1 über das HF-Kabel 17 ein Sendesignal im GSM1800-Band zugeleitet wird, stellen sich entsprechend umgekehrte Verhältnisse ein. Das gleichzeitige Abschalten beider Empfangsverstärker 4, 13 im Sendebetrieb ist im Hinblick darauf bedeutsam, dass anderenfalls durch die Empfangsverstärker 4, 13 unerwünschte Oberwellen erzeugt werden können, welche den auf 'Senden' geschalteten Frequenzzweig a bzw. b ungünstig beeinflussen. Dabei gilt es zu berücksichtigen, dass der Signalweg des gerade nicht sendenden Zweiges a bzw. b durch den Schaltzustand der zugehörigen HF-Umschalter 3, 7 bzw. 10, 14 über den Empfangsverstärker 4 bzw. 13 geleitet ist. Insbesondere beim Aussenden eines GSM900-Signals könnten in dem Empfangsverstärker 13, sofern dieser zugeschaltet bliebe, Oberwellen erzeugt werden, die durch die Frequenzbandweiche 1 nicht gedämpft werden können. Diese Oberwellen würden dann in ungünstiger Weise die Signale des sendenden GSM-Zweiges a überlagern.

Die weitere Ansteuerung der HF-Umschalter 3, 7 bzw. 10, 14 und Verstärker 4, 6, 11, 13 geschieht bei weiterhin fortbestehender Gesprächs- oder Datenverbindung zwischen der Mobilfunkstation und einer Basisstation in Adaption an den GSM-Standard zeitschlitzgesteuert. Dabei ist der Sendeverstärker 6 oder 11 des gewählten Bandes jeweils für die Dauer eines Zeitschlitzes (ca. 577µs) zugeschaltet, während die übrigen Verstärker, insbesondere auch durch die zwischen ihnen und der Detektionsschaltung 2 bzw. 9 des sendeaktiven Zweiges a bzw. b bestehende Steuerverbindung, abgeschaltet sind. Anschließend folgen 7 Zeitschlitze gleicher Länge, in denen die Schaltungsanordnung auf Empfang geschaltet ist. Entsprechend schalten die HF-Umschalter 3, 7 bzw. 10, 14 des aktiven Frequenzzweiges a bzw. b dessen Signalweg zurück auf den Empfangsverstärker 4 bzw. 13. Gleichzeitig werden die Empfangsverstärker 4, 13 beider Zweige a, b zu- bzw. eingeschaltet, während beide Sendeverstärker 6, 11 den abgeschalteten Zustand einnehmen. Erst mit dem Eintritt in den nächsten Sendezeitschlitz wird der Signalweg des ausgewählten Frequenzzweiges a oder b wieder über dessen Sendeverstärker 6 oder 11 geleitet und der entsprechende Verstärker 6 oder 11 zugeschaltet. Dabei lässt die Schaltungsanordnung einen Bandwechsel gegenüber dem im vorhergehenden Sendezeitschlitz gewählten Band zu.

### Liste der Verwendeten Bezugszeichen

- 1: Frequenzbandweiche
- 2: Detektorschaltung
- 3: HF-Umschalter
- 4: Empfangsverstärker
- 5: ODER-Glied
- 6: Sendeverstärker
- 7: HF-Umschalter
- 8: Frequenzbandweiche
- 9: Detektorschaltung
- 10: HF-Umschalter
- 11: Sendeverstärker
- 12: ODER-Glied
- 13: Empfangsverstärker
- 14: HF-Umschalter
- 15: Anschluss für Mobilfunkstation
- 16: Anschluss für Antenne
- 17: HF-Kabel

## Patentansprüche

1. Schaltungsanordnung zum Kompensieren der in einem eine Mobilfunkstation und eine Antenne verbindenden HF-Kabel (17) auftretenden Dämpfung, bei der empfangene Signale über einen Empfangsverstärker (4, 13) und gesendete Signale über einen Sendeverstärker (6, 11) geführt sind, wobei das wechselseitige Umschalten des Signalweges für zu empfangende und zu sendende Signale durch jeweils mit einer Detektorschaltung (2, 9) in einer Steuerverbindung stehende HF-Umschalter (3, 7, 10, 14) erfolgt und die Empfangs- und Sendeverstärker (4, 6, 13, 11) ebenfalls mit der Detektorschaltung (2, 9) verbunden zu- und abschaltbar sind, **dadurch gekennzeichnet, dass** die Schaltungsanordnung zum Realisieren eines dualbandigen Betriebes einen ersten und einen zweiten Frequenzzweig (a, b) aufweist und dass die Frequenzzweige (a, b) eingangs- und ausgangsseitig jeweils über eine Frequenzbandweiche (1, 8) gemeinsam auf einen mit dem HF-Kabel (17) verbundenen Eingang und Ausgang geführt sind, wobei jeder Frequenzzweig (a, b) jeweils einen der Empfangsverstärker (4, 13) und einen der Sendeverstärker (6, 11) aufweist, die mit den jeweils zugeordneten HF-Umschaltern (3, 7, 10, 14) von der Detektorschaltung (2, 9) angesteuert werden und wobei zusätzlich zu den in einem Frequenzzweig (a, b) zwischen dessen Detektorschaltung (2, 9) und dem Empfangsverstärker (4, 13) sowie dem Sendeverstärker (6, 11) bestehenden Steuerverbindungen eine weitere Steuerverbindung zwischen dieser Detektorschaltung (2, 9) und dem Empfangsverstärker (4, 13) des jeweils anderen Frequenzzweiges (a, b) besteht und dabei die Verstärker mittels der zwischen ihnen und den Detektorschaltungen (2, 9) bestehenden Steuerverbindungen so gesteuert werden, dass bei entsprechendem Schaltzustand der HF-Umschalter (3, 7, 10, 14) entweder nur die Empfangsverstärker (4,13) beider Zweige (a, b) oder nur der Sendeverstärker (6, 11) eines Zweiges (a, b) zugeschaltet sind.

2. Schaltungsanordnung nach Anspruch 1, **dadurch gekennzeichnet, dass** im Grundzustand der Schaltung in beiden Frequenzzweigen (a, b) der Signalweg für zu empfangende Signale aktiv geschaltet ist und die Empfangsverstärker (4, 13) beider Frequenzzweige (a, b) zugeschaltet sind.

3. Schaltungsanordnung nach Anspruch 1 oder 2, **dadurch gekennzeichnet, dass**, solange die Mobilfunkstation im idle mode arbeitet, in beiden Frequenzzweigen (a, b) der Signalweg für zu empfangende Signale aktiv geschaltet ist und die Empfangsverstärker (4, 13) beider Frequenzzweige (a, b) zugeschaltet sind.

4. Schaltungsanordnung nach einem der Ansprüche 1 bis 3, **dadurch gekennzeichnet, dass**, solange die Mobilfunkstation zwar in einer Funkzelle eingebucht ist, aber zwischen ihr und einer Basisstation kein Datenaustausch erfolgt und von keiner der Detektorschaltungen (2, 9) ein ihren festgelegten Schwellwert überschreitendes Sendesignal detektiert wird, in beiden Frequenzzweigen (a, b) der Signalweg für zu empfangende Signale aktiv geschaltet ist und die Empfangsverstärker (4, 13) beider Frequenzzweige (a, b) zugeschaltet sind.

5. Schaltungsanordnung nach einem der Ansprüche 1 bis 4, **dadurch gekennzeichnet, dass** die Steuerung der Verstärker während eines zwischen der Mobilfunkstation und einer Basisstation erfolgenden Datenaustausches zeitschlitzgesteuert erfolgt, wobei innerhalb eines Sende- und Empfangszeitschlitze jeweils gleicher Länge umfassenden Zeitrahmens beim Eintreten in einen Sendezeitschlitz der Sendeverstärker (6, 11) des dem jeweiligen Band der bestehenden Verbindung zugeordneten Frequenzzweiges (a, b) zugeschaltet und dabei alle anderen Verstärker abgeschaltet sind, während innerhalb der Empfangszeitschlitze beide Empfangsverstärker (4, 13) zu- und beide Sendeverstärker (6, 11) abgeschaltet sind.

6. Schaltungsanordnung nach Anspruch 5, **dadurch gekennzeichnet, dass** durch die Ausbildung der Frequenzbandweiche (1) am sendeseitigen Eingang beim Übergang von einem Zeitrahmen zum nächsten mit dem Eintritt in den nächsten Zeitschlitz für das Senden ein Umschalten auf das jeweils andere, durch den entsprechenden Frequenzzweig (a, b) unterstützte Band ermöglicht ist.

## Claims

1. Circuit arrangement for compensating damping occurring in a HF cable (17) connecting a mobile radio station and an antenna, in which received signals are directed via a receiving amplifier (4, 13) and transmitted signals are directed via a transmitting amplifier (6, 11), whereby the signal path for signals to be received and signals to be transmitted is alternately switched by means of HF switches (3, 7, 10, 14), each of which has a control connection to a detector circuit (2, 9), and the receiving and transmitting amplifiers (4, 6, 13, 11) are likewise connected to the detector circuit (2, 9) so that they can be switched on and off, **characterised in that** the circuit arrangement has a first and a second frequency branch (a, b) for running dual-band operation and the frequency branches (a, b) are each run jointly on the input and output side via a frequency band switch (1, 8) on an input and an output connected to the HF cable (17), each frequency branch (a, b) respectively incorporating one of the receiving amplifiers (4, 13) and one of the transmitting amplifiers (6, 11) which are activated by the detector circuit (2, 9) by means of the respectively co-operating HF switches (3, 7, 10, 14), and, in addition to the control connections which exist in a frequency branch (a, b) between its detector circuit (2, 9) and the receiving amplifier (4, 13) and the transmitting amplifier (6, 11), another control connection exists between this detector circuit (2, 9) and the receiving amplifier (4, 13) of the respective other frequency branch (a, b) and, this being the case, the amplifiers are controlled in such a way by the control connections which exist between them and the detector circuits (2, 9) that, depending on the switching state of the HF switches (3, 7, 10, 14), either only the receiving amplifiers (4, 13) of both branches (a, b) or only the transmitting amplifier (6, 11) of one branch (a, b) is/are switched on.

2. Circuit arrangement as claimed in claim 1, **characterised in that**, when the circuit is in the normal state, the signal path for signals to be received is actively connected in both frequency branches (a, b) and the receiving amplifiers (4, 13) of both frequency branches (a, b) are switched on.

3. Circuit arrangement as claimed in claim 1 or 2, **characterised in that** as long as the mobile radio station is operating in idle mode, the signal path for signals to be received is actively connected in both frequency branches (a, b) and the receiving amplifiers (4, 13) of both frequency branches (a, b) are switched on.

4. Circuit arrangement as claimed in one of claims 1 to 3, **characterised in that** as long as the mobile radio station is logged into a mobile cell but no data exchange is taking place between it and a base station and a transmission signal exceeding its fixed threshold value is not detected by any of the detector circuits (2, 9), the signal path for signals to be received is actively connected in both frequency branches (a, b) and the receiving amplifiers (4, 13) of both frequency branches (a, b) are switched on.

5. Circuit arrangement as claimed in one of claims 1 to 4, **characterised in that** the amplifiers are controlled in a time slot during a data exchange between the mobile radio station and a base station, in which case within a time frame comprising transmission and reception time slots each of equal length, the transmitting amplifier (6, 11) of the frequency branch (a, b) assigned to the respective band of the existing connection is switched on and thus all other amplifiers are switched off when a transmission time slot is entered, whereas inside the reception time slot, both receiving amplifiers (4, 13) are switched on and both transmitting amplifiers (6, 11) are switched off.

6. Circuit arrangement as claimed in claim 5, **characterised in that** by disposing the frequency band switch (1) at the transmission-side input, when switching from one time frame to the next, a switch is made possible to the other respective band supported by the corresponding frequency branch (a, b) on entering the next time slot for the transmission.

## Revendications

1. Agencement de circuit pour compenser l'atténuation apparaissant dans un câble HF (17) reliant une station de téléphonie mobile à une antenne, sur lequel des signaux reçus et des signaux émis sont guidés respectivement au moyen d'un amplificateur de réception (4, 13) et d'un amplificateur d'émission (6, 11), la commutation alternative du trajet du signal pour des signaux à recevoir et des signaux à émettre s'effectuant par des inverseurs HF (3, 7, 10, 14) étant dans une liaison de commande respectivement avec un circuit détecteur (2, 9) et les amplificateurs de réception et d'émission (4, 6, 13, 11) pouvant être connectés et déconnectés également en liaison avec le circuit détecteur (2, 9), **caractérisé en ce que** l'agencement de circuit présente une première et une seconde branches de fréquence (a, b) pour la réalisation d'une exploitation à bande dual et **en ce que** les branches de fréquence (a, b) sont guidées côté entrée et côté sortie respectivement au moyen d'un aiguillage de bande de fréquence (1, 8) conjointement sur une entrée et une sortie reliées au câble HF (17), chaque branche de fréquence (a, b) présentant respectivement l'un des amplificateurs de réception (4, 13) et l'un des amplificateurs d'émission (6, 11), qui sont activés avec les inverseurs HF (3, 7, 10, 14) qui lui sont attribués par le circuit détecteur (2, 9) et, en supplément des liaisons de commande existant dans une branche de fréquence (a, b) entre son circuit détecteur (2, 9) et l'amplificateur de réception (4, 13) ainsi que l'amplificateur d'émission (6, 11), une autre liaison de commande existant entre ce circuit détecteur (2, 9) et l'amplificateur de réception (4, 13) de l'autre branche de fréquence (a, b) respective et les amplificateurs étant commandés alors au moyen des liaisons de commande existant entre eux et le circuit détecteur (2, 9) de telle sorte que, avec un état de commutation approprié des inverseurs HF (3, 7, 10, 14) soit seulement les amplificateurs de réception (4, 13) des deux branches (a, b) soit seulement l'amplificateur d'émission (6, 11) d'une branche (a, b) sont connectés.

2. Agencement de circuit selon la revendication 1, **caractérisé en ce que**, dans l'état de base du circuit dans les deux branches de fréquence (a, b), le trajet du signal est activement commuté pour des signaux à recevoir et les amplificateurs de réception (4, 13) des deux branches de fréquence (a, b) sont coupés.

3. Agencement de circuit selon la revendication 1 ou 2, **caractérisé en ce que**, aussi longtemps que la station de téléphonie mobile travaille dans le mode idel, le trajet de signal pour des signaux à recevoir est commuté activement dans les deux branches de fréquence (a, b) et les amplificateurs de réception (4, 13) des deux branches de fréquence (a, b) sont connectés.

4. Agencement de circuit selon l'une quelconque des revendication 1 à 3, **caractérisé en ce que**, aussi longtemps que la station de téléphonie mobile est intégrée certes dans une cellule radio, mais qu'il n'y a pas d'échange de données entre elle et une station de base et que aucun des circuits détecteurs (2, 9) ne détecte un signal d'émission dépassant leur valeur seuil définie, le trajet du signal pour des signaux à recevoir est commuté activement dans les deux branches de fréquence (a,b) et les amplificateurs de réception (4, 13) des deux branches de fréquence (a,b) sont connectées.

5. Agencement de circuit selon l'une quelconque des revendications 1 à 4, **caractérisé en ce que** la commande des amplificateurs pendant un échange de données survenant entre la station de téléphonie mobile et la station de base intervient avec une commande par créneau temporel, l'amplificateur d'émission (6, 11) de la branche de fréquence (a, b) attribuée à la bande respective de la liaison existante étant connecté à l'intérieur d'un cadre de temps comprenant des créneaux temporels d'émission et de réception de longueur respectivement identique lors de l'entrée dans un créneau temporel d'émission et tous les autres amplificateurs étant alors déconnectés, alors que les deux amplificateurs de réception (4, 13) sont connectés à l'intérieur des créneaux temporels de réception et les deux amplificateurs d'émission (6, 11) sont déconnectés.

6. Agencement de circuit selon la revendication 5, **caractérisé en ce qu'**une commutation sur l'autre bande respective assistée par la branche de fréquence (a, b) correspondante est rendue possible par la réalisation de l'aiguillage de bande de fréquence (1) sur l'entrée côté émission lors du passage d'un cadre de temps au cadre de temps suivant avec l'entrée dans le prochain créneau temporel pour l'émission.
